# EUROPEAN PATENT APPLICATION

(11) **EP 2 587 627 A1**
(43) Date of publication of application: **01.05.2013**
(21) Application number: 10853548.5
(22) Date of filing: 23.12.2010
(51) Int. Cl.: H02J 17/00, H04N 5/63

(54) **ELECTRONIC DEVICE, WIRELESS POWER SUPPLY SYSTEM THEREOF AND WIRELESS POWER SUPPLY METHOD THEREOF**

(30) Priority: 24.06.2010 CN 201010208330
(71) Applicant: Haier Group Corporation, Qingdao, Shandong 266103 (CN); Qingdao Haier Joint Stock Co., Ltd, Shandong 266103 (CN)
(72) Inventor: YU, Zida, Qingdao Shandong 266103 (CN); LIU, Chao, Qingdao Shandong 266103 (CN); BAI, Bing, Qingdao Shandong 266103 (CN); XU, Yilong, Qingdao Shandong 266103 (CN)
(74) Representative: Ganahl, Bernhard
(86) International application number: PCT/CN2010/080194
(87) International publication number: WO 2011/160410

(57) **Abstract**

An electronic device (100), a wireless power supplying system (10) thereof and a wireless power supplying method thereof. The electronic device (100) includes an internal function circuit (30) and the wireless power supplying system (10). The wireless power supply system (10) includes a wireless electric power emission terminal (11), a wireless electric power receiving terminal (12) and a power supply detection unit (13). The wireless electric power emission terminal (11) includes a transmission terminal control module (111) and an emission terminal power supplying module (112) which are electrically coupled with each other. The wireless electric power receiving terminal (12) wirelessly receives the electric power from the emission terminal power supplying module (112). The power supply detection unit (13) includes an electric power detection module (131), a processor (132) and a warning module (133), which are electrically coupled in turn. The electric power detection module (131) detects an operating voltage received from the wireless electric power receiving terminal (12); and the processor (132) compares the operating voltage with a built-in preset operating voltage range. When the operating voltage is within the preset operating voltage range, the operating voltage is outputted to the internal function circuit (30), and when the operating voltage is beyond the preset range, the processor (132) generates a warning signal and sends the signal to a warning module (133).

## Description

### Field of the Invention

The present invention relates to a wireless power supplying technology, and in particular, to an electronic device adopting wireless power supplying, and a wireless power supplying system and a wireless power supplying method used by the electronic device.

### Background of the Invention

The household electronic devices such as a television obtain the electric power from a power supply, which is generally implemented via a direct contact between conductors. Therefore, to provide the electronic device with the power supply, for example, an Alternating Current (AC) power supply, a power line is required for connecting to the power supply. However, the position of the household electronic device such as a television is limited due to the limitation by the power cable, which brings great inconvenience to users.

So far, a wireless power supplying technology, in which the electric power transmission is performed by the magnetic coupling resonance, has been proposed. Such a technology uses the radiationless magnetic coupling, that is, two resonant objects with the same frequency generate a strong mutual coupling and form a resonant circuit by a single-layer coil, without emitting the electromagnetic wave, so that the waste of the energy is reduced. When a coil provided with an antenna formed of turns of thick copper wire is used, the efficiency is about 40% for 2-meter transmission, and up to about 90% for 1-meter distance, which would establish a widely applicable wireless power supplying technology.

Therefore, if such a wireless power supplying technology is applied to various kinds of electronic devices, for example, the household electronic device such as a television, the user will be provided with great convenience, and the purposes of efficient power supplying and a low electromagnetic interference can be achieved.. If the safety is ensured, the wireless power supplying manner will effectively resolve the problems that the room wiring is complicated, the positions of the household appliances must be fixed and the room wall is damaged by sockets and so on, so as to provide people with more convenience. Further, the wireless power supplying manner can also substantially save the materials used for wiring, such as copper, plastic and rubber, thereby saving resources, reducing pollution and achieving environment friendly.

However, nowadays, there are a series of problems to be resolved in applying above wireless power supplying devices to the electronic device such as a television. For example, there exists a problem of interface stability between the wireless power supply and the electronic device.

### Summary of the Invention

The present invention provides a wireless power supplying system suitable to an electronic device, which has an electric power detection function.

The present invention further provides an electronic device which can operate in a wireless power supplying mode and has the electric power detection function.

The present invention further provides a wireless power supplying method suitable to the electronic device.

In order to achieve above advantages, the present invention provides an electronic device including an internal function circuit and a wireless power supplying system. The wireless power supply system includes a wireless electric power transmitter, a wireless electric power receiver and a power supply detection unit. The wireless electric power transmitter includes a transmitter control module and a transmitter power supplying module electrically coupled. The wireless electric power receiver receives electric power from the transmitter power supplying module wirelessly. The power supply detection unit includes an electric power detection module, a processor and an alarm module electrically coupled in succession, with the processor being electrically coupled to the internal function circuit. The electric power detection module detects an electric power parameter of the wireless electric power receiver; and the processor compares the electric power parameter with a built-in preset range thereof, outputs an voltage of the wireless electric power receiver to the internal function circuit when the electric power parameter is within the preset range, and generates and outputs an alarm signal to the alarm module when the electric power parameter of the wireless electric power receiver is beyond the preset range.

In one embodiment of the present invention, the power supply detection unit further includes a control adjusting module electrically coupled to the processor, and when the electric power parameter of the wireless electric power receiver is beyond the preset range, the processor further generates and outputs an adjusting signal to the control adjusting module, and the control adjusting module sends out a control signal to the transmitter control module according to the adjusting signal, to enable the transmitter control module to control the transmitter power supplying module to adjust the supplied electric power automatically.

In one embodiment of the present invention, the transmitter control module controls the transmitter power supplying module to adjust the supplied electric power automatically, in a manner that a resonance frequency of a transmitting coupling coil of the transmitter control module is adjusted by adjusting an input current of the transmitter control module.

In one embodiment of the present invention, the transmitter control module controls the transmitter power supplying module to adjust the supplied electric power automatically, in a manner that a resonance amplitude of the transmitter control module is adjusted by adjusting an input voltage of the transmitter control module, but not limited thereto.

In one embodiment of the present invention, the alarm module displays the prompt message or sends out a prompt sound when the transmitter power supplying module adjusts the supplied electric power automatically.

In one embodiment of the present invention, the alarm module includes a display unit, a voice unit or both.

In one embodiment of the present invention, the voice unit of the alarm module is a buzzer.

In one embodiment of the present invention, the electronic device further includes a standby power supply electrically coupled to the internal function circuit and the processor, and when the electric power parameter of the wireless electric power receiver is beyond the preset range, the processor further generates and outputs an electric power switching signal to the transmitter control module and the standby power supply, to enable the transmitter control module to turn off the transmitter power supplying module and connect the electronic device to the standby power supply.

In one embodiment of the present invention, the standby power supply is an internal storage battery of the electronic device, or an AC input circuit for the utility power supply input.

The present invention further proposes a wireless power supplying system including a wireless electric power transmitter, a wireless electric power receiver and a power supply detection unit. The wireless electric power transmitter includes a transmitter control module and a transmitter power supplying module electrically coupled. The wireless electric power receiver receives electric power from the transmitter power supplying module wirelessly. The power supply detection unit includes an electric power detection module, a processor and an alarm module electrically coupled in succession, wherein the processor is electrically coupled to an internal function circuit. The electric power detection module detects an operating voltage received from the wireless electric power receiver, and the processor compares the operating voltage with a built-in preset range of operating voltage, outputs the operating voltage to the internal function circuit when the operating voltage is within the preset range of operating voltage, and generates and outputs an alarm signal to the alarm module when the operating voltage output from the wireless electric power receiver is beyond the preset range of operating voltage.

In one embodiment of the present invention, the power supply detection unit further includes a control adjusting module electrically coupled to the processor, the processor further generates and outputs an adjusting signal to the control adjusting module when the operating voltage output from the wireless electric power receiver is beyond the preset range of operating voltage, and the control adjusting module sends out a control signal to the transmitter control module according to the adjusting signal, to enable the transmitter control module to control the transmitter power supplying module to adjust the supplied electric power automatically.

The present invention further proposes a wireless power supplying method including steps of: generating wireless electric power through the induction between a wireless electric power receiver and a wireless electric power transmitter; detecting, by a power supply detection unit, an electric power parameter of the wireless electric power receiver; and comparing the electric power parameter with a built-in preset range thereof, when the electric power parameter is within the preset range, the wireless electric power of the wireless electric power receiver is output to an internal circuit of an electronic device as an operating voltage, and when the electric power parameter of the wireless electric power receiver is beyond the preset range, an alarm signal is generated and output to an alarm module.

In one embodiment of the present invention, when the electric power parameter of the wireless electric power receiver is beyond the preset range, the wireless power supplying method further includes: generating and outputting an adjusting signal to a control adjusting module, and the control adjusting module sending out a control signal to a transmitter control module according to the adjusting signal, to enable the transmitter control module to control a transmitter power supplying module to adjust the supplied electric power automatically.

The present invention detects the electric power output from the wireless power supplying system; correspondingly and automatically adjusts the wireless electric power output from the wireless power supplying system according to the detection result, and further switches the power supply mode and sends out an alarm message, to allow the electronic device to operate in the normal state maximally and improve the interface stability between the wireless power supply and the electronic device, which is advantageous to the normal operation of the electronic device to achieve the purpose of an effective and stable electric power supplying.

Above description is only general description of the inventive solutions. Embodiments are described as follows in conjunction with the drawings, in order for better understanding of the technical means of the present invention, carrying out the present invention according to the content of the description, and clearly understanding of the above and other purposes, features and advantages.

### Brief Description of the Drawings

Fig. 1 is a structure block diagram of an electronic device according to a preferred embodiment of the present invention.
Fig. 2 is a structure block diagram of the electronic device according to another preferred embodiment of the present invention.

### Preferred Embodiments of the Present Invention

In order to further illustrate the technical means adopted by the present invention to achieve the predetermined purpose and effects thereof, the specific embodiments, structures, features and effects of the perspective display device proposed according to the present invention are described as follows in detail.

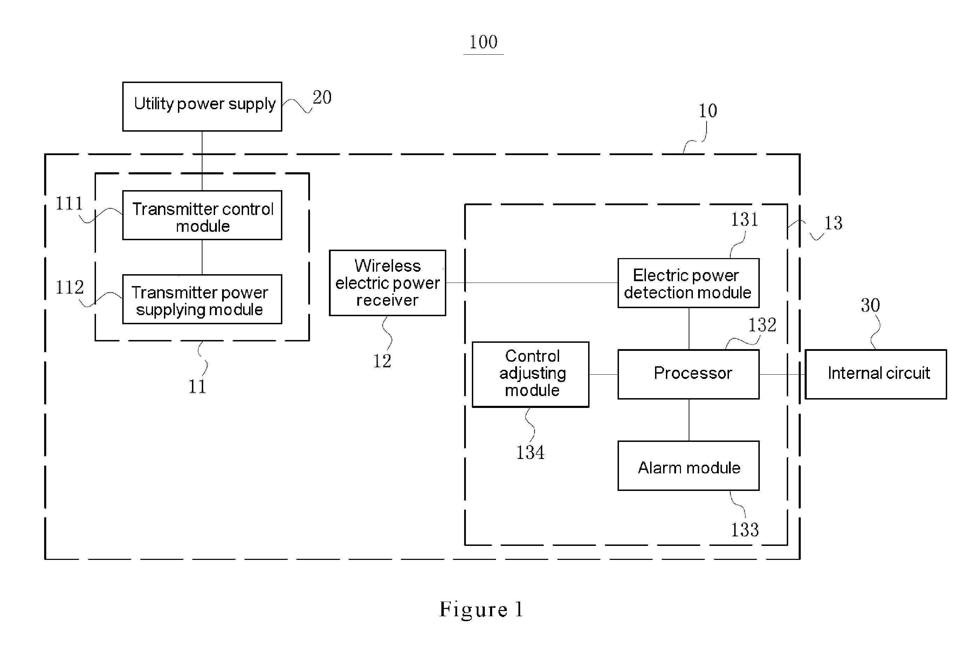

Reference is now made to Fig. 1 which is a structure block diagram of the electronic device according to a first preferred embodiment of the present invention. As shown in Fig. 1, in addition to a wireless power supplying system 10, the electronic device 100 includes an internal circuit 30, which is an internal function circuit of the electronic device 100 such as an audio processing circuit. In a wireless power supplying mode, the wireless power supplying system 10 provides and inputs electric power to the internal circuit 30 of the electronic device 100, to provide the electronic device 100 with an operating voltage. The electronic device 100 is, for example, a television, but not limited thereto.

Specifically, the wireless power supplying system 10 includes a wireless electric power transmitter 11, a wireless electric power receiver 12 and a power supply detection unit 13. The wireless electric power transmitter 11 can be connected to an external power supply in a plug-socket manner. In the present embodiment, the external power supply is a utility power supply 20, but in the present invention, the connection manner is not limited thereto. The wireless electric power transmitter 11 includes a transmitter control module 111 and a transmitter power supplying module 112 coupled electrically. The wireless electric power transmitter 11 is electrically coupled to the utility power supply 20, and is adapted to receive and process a utility power supply voltage and then transmit the electric power to the wireless electric power receiver 12 via a resonance coupling between a transmitting coupling coil (not shown) of the transmitter power supplying module 112 and a receiving coupling coil (not shown) of the wireless electric power receiver 12.

The wireless electric power receiver 12 converts an induced voltage of the receiving coupling coil into an operating voltage, and further outputs the operating voltage to the internal circuit 30 via the power supply detection unit 13. In the preferred embodiment of the present invention, the process by which the wireless electric power receiver 12 converts the induced voltage to the operating voltage includes the AC-DC voltage conversion, voltage stabilization, voltage reduction and so on performed on the induced voltage, but not limited thereto.

The power supply detection unit 13 includes an electric power detection module 131, a processor 132, an alarm module 133 and a control adjusting module 134. The electric power detection module 131, the processor 132 and the alarm module 133 are electrically coupled in succession. Further, the processor 132 is electrically coupled to the control adjusting module 134 and the internal circuit 30. The alarm module 133 may further include a display unit (not shown), a voice unit (not shown) or both. The above display unit may be a display screen of the electronic device 100, and the voice unit may be a buzzer.

The electric power detection module 131 detects an electric power parameter (such as an operating voltage and an operating current) of the wireless electric power receiver 12, and the processor 132 compares the electric power parameter with a built-in preset range thereof. In the present embodiment, an example in which the electric power parameter is a voltage is taken for description, but the present invention is not limited thereto. In the present embodiment, the electric power detection module 131 detects an operating voltage of the wireless electric power receiver 12, and the processor 132 compares the operating voltage with the built-in preset range of operating voltage. When the operating voltage is within the preset range of operating voltage, the processor 132 outputs the operating voltage to the internal circuit 30. Otherwise, when the operating voltage output from the wireless electric power receiver 12 is less than or greater than any voltage value in the preset range of operating voltage, the processor 132 generates and outputs an alarm signal to the alarm module 133. Further, the processor 132 generates and outputs an adjusting signal to the control adjusting module 134. The control adjusting module 134 sends a control signal to the wireless electric power receiver 12 and the transmitter control module 111 according to the adjusting signal. Transmitter power supplying module 112 adjusts the supplied electric power under the control of the transmitter control module 111. In the preferred embodiment of the present invention, the manner in which the transmitter control module 111 controls the transmitter power supplying module 112 to adjust the supplied electric power may include adjusting a resonance frequency of the transmitting coupling coil of the transmitter control module 111 by adjusting an input current of the transmitter control module 111, or adjusting a resonance amplitude of the transmitter control module 111 by adjusting an input voltage of the transmitter control module 111, but not limited thereto.

After the above adjustment, the resonance coupling between the transmitting coupling coil of the transmitter power supplying module 112 and the receiving coupling coil of the wireless electric power receiver 12 is implemented again, so that an adjusted operating voltage is input to the electric power detection module 131, thereby implementing the automatic adjustment of the wireless electric power. During the automatic adjustment, the display unit of the alarm module 133 can display a message that reads "the wireless electric power is in the automatic adjustment, please wait", and of course, the message content is not limited thereto. Alternatively, the voice unit of the alarm module 133 can send out a predetermined sound to prompt the user.

Further, if the automatic adjustment fails, the electronic device 100 will be powered off automatically.

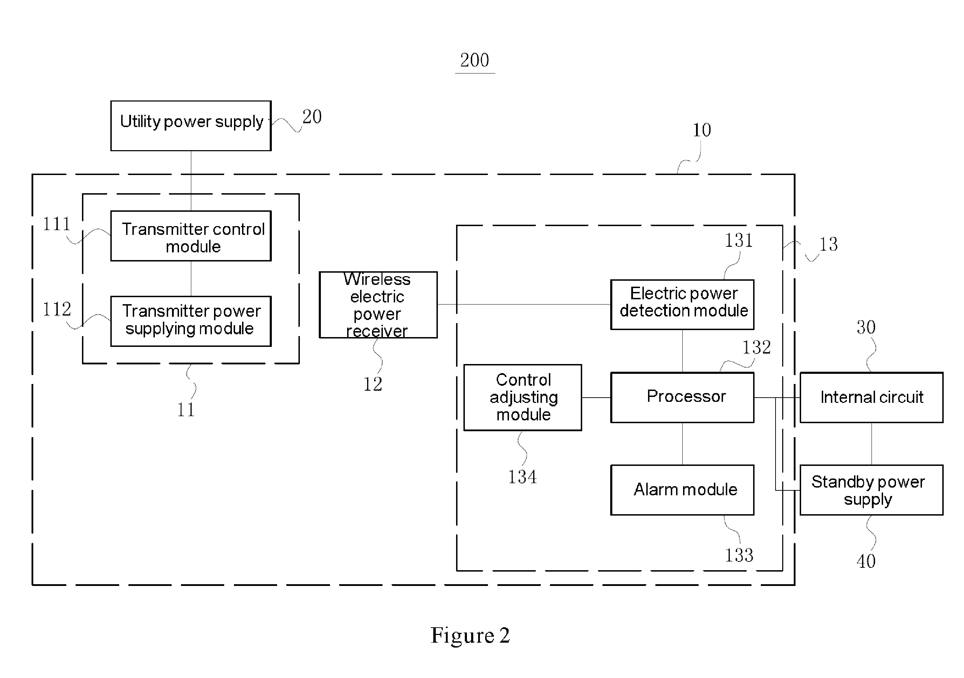

Reference is now made to Fig. 2, which depicts a structure block diagram of an electronic device according to a second preferred embodiment of the present invention. As shown in Fig. 2, in addition to a wireless power supplying system 10, the electronic device 200 according to the second preferred embodiment of the present invention further includes an internal circuit 30 and a standby power supply 40 which are electrically coupled. In a wireless power supplying mode, the wireless power supplying system 10 provides and inputs electric power to the internal circuit 30 of the electronic device 200, to provide the electronic device 200 with an operating voltage. The electronic device 200 is, for example, a television, but not limited thereto. The internal circuit 30 is an internal function circuit of the electronic device 200, such as an audio processing circuit.

Specifically, the wireless power supplying system 10 includes a wireless electric power transmitter 11, a wireless electric power receiver 12 and a power supply detection unit 13. The wireless electric power transmitter 11 can be connected to the utility power supply 20 in a plug-socket manner, but in the present invention, the connection manner is not limited thereto. The wireless electric power transmitter 11 includes a transmitter control module 111 and a transmitter power supplying module 112 which are electrically coupled. The wireless electric power transmitter 11 is electrically coupled to a utility power supply 20 to receive and process a utility power supply voltage and then transmit the electric power to the wireless electric power receiver 12 via a resonance coupling between a transmitting coupling coil (not shown) of the transmitter power supplying module 112 and a receiving coupling coil (not shown) of the wireless electric power receiver 12.

The wireless electric power receiver 12 converts an induced voltage of the receiving coupling coil into an operating voltage, and further outputs the operating voltage to the internal circuit 30 via the power supply detection unit 13. In the preferred embodiment of the present invention, the process by which the wireless electric power receiver 12 converts the induced voltage to the operating voltage includes the AC-DC voltage conversion, voltage stabilization, voltage reduction and so on performed on the induced voltage, but not limited thereto.

The power supply detection unit 13 includes an electric power detection module 131, a processor 132 and an alarm module 133 electrically coupled in succession. Further, the processor 132 is electrically coupled to the internal circuit 30 and the standby power supply 40. The alarm module 133 can further include a display unit (not shown), a voice unit (not shown) or both. The above display unit can be a display screen of the electronic device 200, and the voice unit can be a buzzer.

The wireless electric power receiver 12 converts an induced voltage of the receiving coupling coil into an operating voltage, and further outputs the operating voltage to the internal circuit 30 via the power supply detection unit 13. In the preferred embodiment of the present invention, the process by which the wireless electric power receiver 12 converts the induced voltage to the operating voltage includes the AC-DC voltage conversion, voltage stabilization, voltage reduction and so on performed on the induced voltage, but not limited thereto.

The power supply detection unit 13 includes an electric power detection module 131, a processor 132, an alarm module 133 and a control adjusting module 134. The electric power detection module 131, the processor 132 and the alarm module 133 are electrically coupled in succession. Further, the processor 132 is electrically coupled to the control adjusting module 134 and the internal circuit 30. The alarm module 133 can further include a display unit (not shown), a voice unit (not shown) or both. The above display unit can be a display screen of the electronic device 200, and the voice unit can be a buzzer.

The electric power detection module 131 detects the operating voltage received from the wireless electric power receiver 12, and the processor 132 compares the operating voltage with a built-in preset range of operating voltage. When the operating voltage is within the preset range of operating voltage, the processor 132 outputs the operating voltage to the internal circuit 30. Otherwise, when the operating voltage output from the wireless electric power receiver 12 is less than or greater than any voltage value in the preset range of operating voltage, the processor 132 generates and outputs an alarm signal to the alarm module 133. Further, the processor 132 generates and outputs an electric power switching signal to the transmitter control module 111 and the standby power supply 40, to instruct the transmitter control module 111 to turn off the transmitter power supplying module 112 and connect the electronic device to the standby power supply 40, that is, switch to the standby power supply 40 to supply power to the electronic device 200.

In the preferred embodiment of the present invention, the standby power supply 40 can be, for example, an internal storage battery in the electronic device 200, or an AC input circuit for a utility power supply input. If the standby power supply 40 is the internal storage battery, in this case, the display unit of the alarm module 133 can display a message that reads "the wireless electric power is abnormal, please make an adjustment", to prompt the user to adjust the wireless electric power transmitter of the wireless power supplying system manually, and of course, the content of the message is not limited thereto. Alternatively, the voice unit of the alarm module 133 can send out a predetermined sound to prompt the user. In the case that the wireless electric power supplying system remains out of operation after the internal storage battery lasts for a preset time, the display unit of the alarm module 133 can display the message that reads "the wireless electric power is abnormal, please turn it off", to prompt the user to turn off the electronic device 200. Of course, the voice unit of the alarm module 133 can send out a predetermined sound to prompt the user.

If the standby power supply 40 is an AC input circuit for the utility power supply input, in this case, the display unit of the alarm module 133 can display the message that reads "the wireless electric power is abnormal, please switch the power supply", to prompt the user to switch the electronic device 200 to the AC power supplying mode based on the utility power supply manually.

The above electric power abnormality can be the case where the voltage is unstable or lower than a normal operating voltage due to problems occurring in the coupling resonance or an instant change to the voltage due to the environmental affection thereon.

It can be understood that the above alarm module 133 can also include an indicator light, and when the electric power is abnormal, an alarm is made by the flashing of the indicator light.

In addition, those skilled in the art should understand that the transmission of the electric power between the transmitter power supplying module 112 and the wireless electric power receiver 12 of the wireless power supplying system is not limited to the magnetic coupling resonance manner, and the transmission of the electric power can also adopt other wireless coupling manner (such as the electromagnetic induction).

The present invention also provides a wireless power supplying method, which include steps of: providing a wireless electric power transmitter 11 which includes a transmitter control module 111 and a transmitter power supplying module 112 coupled electrically; providing a wireless electric power receiver 12, the induction between the wireless electric power receiver 12 and the transmitter power supplying module 112 generates wireless electric power; and providing a power supply detection unit 13, which includes an electric power detection module 131, a processor 132 and an alarm module 133 electrically coupled in succession, the electric power detection module 131 is adapted to detect an electric power parameter of the wireless electric power receiver 12, the processor 132 is adapted to compare the electric power parameter with a built-in preset range thereof, and when the electric power parameter is within the preset range, the processor 132 outputs the wireless electric power of the wireless electric power receiver 12 to an internal circuit 30 of an electronic device as an operating voltage; when the electric power parameter of the wireless electric power receiver 12 is beyond the preset range, the processor 132 generates and outputs an alarm signal to the alarm module 133. In addition, when the electric power parameter of the wireless electric power receiver 12 is beyond the preset range, the wireless power supplying method further includes steps that: the processor 132 generates and outputs an adjusting signal to a control adjusting module 134, and the control adjusting module 134 sends out a control signal to the transmitter control module 111 according to the adjusting signal, to allow the transmitting control module 111 to control the transmitter power supplying module 112 to adjust the supplied electric power automatically.

Briefly, in the embodiment of the present invention, the electric power output from the wireless power supplying system is detected; the wireless electric power output from the wireless power supplying system is adjusted correspondingly and automatically according to the detection result; and further the power supply mode may be switched and an alarm message may be sent out, to enable the electronic device to operate in a normal state maximally and improve the interface stability between the wireless power supply and the electronic device, which is advantageous to the normal operation of the electronic device to achieve the purpose of an effective and stable electric power supplying.

The above description is merely the preferred embodiments of the present invention, and it is not intended to act as any form of limitation for the present invention. Although the present invention has been disclosed with the above preferred embodiment, the embodiment is not intended to limit the present invention. Those skilled in the art can amend and modify the above disclosed technical content as equivalent embodiments with equivalent variation, without departing from the scope of the technical solution of the present invention. However, the contents without departing from the technical solution of the present invention, any of simple amendments, equivalent variations and modifications for the above embodiments based on the technical essence of the present invention, should fall into the scope of the technical solution of the present invention.

### Industrial Applicability of Invention

Briefly, in the embodiment of the present invention, the electric power output from the wireless power supplying system is detected; the wireless electric power output from the wireless power supplying system is adjusted correspondingly and automatically according to the detection result; and further the power supply mode may be switched and an alarm message may be sent out, to enable the electronic device to operate in a normal state maximally and improve the interface stability between the wireless power supply and the electronic device, which is advantageous to the normal operation of the electronic device to achieve the purpose of an effective and stable electric power supplying.

## Claims

1. An electronic device comprising an internal function circuit, further comprising a wireless power supplying system including:
a wireless electric power transmitter, which includes a transmitter control module and a transmitter power supplying module containing a transmitting coupling coil, the transmitter control module and the transmitter power supplying module being electrically coupled;
a wireless electric power receiver, which receives electric power from the transmitter power supplying module wirelessly; and
a power supply detection unit, which includes an electric power detection module, a processor and an alarm module electrically coupled in succession, wherein the electric power detection module is adapted to detect an electric power parameter of the wireless electric power receiver, and if the processor determines that the electric power parameter is beyond a preset range thereof, the processor generates and outputs an alarm signal to the alarm module.

2. The electronic device of claim 1, wherein the power supply detection unit further comprises a control adjusting module electrically coupled to the processor, and when the electric power parameter of the wireless electric power receiver is beyond the preset range, the processor further generates and outputs an adjusting signal to the control adjusting module, and the control adjusting module issues a control signal to the transmitter control module according to the adjusting signal, to cause the transmitter control module to control the transmitter power supplying module to adjust the supplied electric power automatically.

3. The electronic device of claim 2, wherein the transmitter control module controls the transmitter power supplying module to adjust the supplied electric power automatically, in a manner that a resonance frequency of the transmitting coupling coil of the transmitter power supplying module is adjusted by adjusting an input current of the transmitter control module.

4. The electronic device of claim 2, wherein the transmitter control module controls the transmitter power supplying module to adjust the supplied electric power automatically, in a manner that a resonance amplitude of the transmitter power supplying module is adjusted by adjusting an input voltage of the transmitter control module.

5. The electronic device of claim 2, wherein the alarm module displays a prompt message or makes a prompt sound when the transmitter power supplying module adjusts the supplied electric power automatically.

6. The electronic device of claim 1, wherein the alarm module includes a display unit, a voice unit, or both of the display unit and the voice unit.

7. The electronic device of claim 6, wherein the voice unit of the alarm module includes a buzzer.

8. The electronic device of claim 1, wherein the electronic device further includes a standby power supply electrically coupled to the internal function circuit and the processor, and when the electric power parameter of the wireless electric power receiver is beyond the preset range, the processor further generates and outputs an electric power switching signal to the transmitter control module and the standby power supply, to instruct the transmitter control module to turn off the transmitter power supplying module and connect the electronic device to the standby power supply.

9. The electronic device of claim 6, wherein the standby power supply is an internal storage battery of the electronic device, or an AC input circuit for the utility power supply input.

10. A wireless power supplying system, comprising:
a wireless electric power transmitter, which includes a transmitter control module and a transmitter power supplying module electrically coupled;
a wireless electric power receiver, which is adapted to receive the electric power from the transmitter power supplying module wirelessly; and
a power supply detection unit, which includes an electric power detection module, a processor and an alarm module electrically coupled in succession, wherein the processor is electrically coupled to an internal function circuit, the electric power detection module detects an operating voltage received from the wireless electric power receiver, and the processor compares the operating voltage with a built-in preset range of operating voltage, and outputs the operating voltage to the internal function circuit when the operating voltage is within the preset range of operating voltage, or generates and outputs an alarm signal to an alarm module when the operating voltage output from the wireless electric power receiver is beyond the preset range of operating voltage.

11. The wireless power supplying system of claim 10, wherein the power supply detection unit further comprises a control adjusting module electrically coupled to the processor, the processor further generates and outputs an adjusting signal to the control adjusting module when the operating voltage output from the wireless electric power receiver is beyond the preset range of operating voltage, and the control adjusting module issues a control signal to the transmitter control module according to the adjusting signal, to cause the transmitter control module to control the transmitter power supplying module to adjust the supplied electric power automatically.

12. A wireless power supplying method comprising steps of:
generating wireless electric power through the induction between a wireless electric power receiver and a wireless electric power transmitter;
detecting, by a power supply detection unit, an electric power parameter of the wireless electric power receiver; and
comparing the electric power parameter with a built-in preset range thereof, wherein,
when the electric power parameter is within the preset range, the wireless electric power of the wireless electric power receiver is output to an internal circuit of an electronic device as an operating voltage, and wherein,
when the electric power parameter of the wireless electric power receiver is beyond the preset range, an alarm signal is generated and output to an alarm module.

13. The wireless power supplying method of claim 12, wherein when the electric power parameter of the wireless electric power receiver is beyond the preset range, the wireless power supplying method further comprises: generating and outputting an adjusting signal to a control adjusting module, and the control adjusting module issuing a control signal to a transmitter control module according to the adjusting signal, to cause the transmitter control module to control the transmitter power supplying module to adjust the supplied electric power automatically.
